# EUROPÄISCHE PATENTSCHRIFT

(11) **EP 3 354 553 B1**
(45) Veröffentlichungstag und Bekanntmachung des Hinweises auf die Patenterteilung: **10.11.2021**
(21) Anmeldenummer: 18000062.2
(22) Anmeldetag: 26.01.2018
(51) Int. Cl.: B62M 9/10, B62M 9/12

(54) **MEHRFACH-RITZELANORDNUNG MIT SCHWEISSVERBINDUNG**
MULTI-GEAR PINION ASSEMBLY WITH A WELDED JOINT
DISPOSITIF DE PIGNONS MULTIPLES À ASSEMBLAGE PAR SOUDURE

(30) Priorität: 31.01.2017 DE 102017000855
(43) Veröffentlichungstag der Anmeldung: 01.08.2018
(73) Patentinhaber: SRAM Deutschland GmbH, 97424 Schweinfurt (DE)
(72) Erfinder: Reinbold, Matthias, 97070 Würzburg (DE); Lee, Hong-Chou, 236 New Taipei City (TW)

(56) Entgegenhaltungen:
- EP-A1- 2 826 701
- DE-A1-102009 006 101
- DE-U1-202015 005 643
- GB-A- 2 177 628
- US-A1- 2016 272 002
- US-B1- 6 428 437

## Beschreibung

Die Erfindung betrifft eine Mehrfach-Ritzelanordnung zur Montage auf einem Antreiber und einen Fahrradantrieb mit einer solchen Mehrfach-Ritzelanordnung.

Die Anzahl von Ritzeln an Mehrfach-Ritzelanordnungen zur Montage an einer Hinterradnabe eines Fahrrades hat in den letzten Jahren immer weiter zugenommen. Anordnungen mit Ritzeln mit einer besonders großen Anzahl von Zähnen, insbesondere 50 Zähne und mehr und/oder Ritzel mit einer besonders kleinen Anzahl von Zähnen, insbesondere zehn Zähne oder weniger, vergrößern den Übersetzungsbereich bzw. die Spreizung des Antriebs. Die erhöhte Anzahl von zwölf oder mehr Ritzeln bringt allerdings auch Probleme mit sich. Zum einen ist der Bauraum, in dem das Ritzel-Paket angeordnet wird aufgrund der Fahrradgeometrie und verschiedener technischer Standards beschränkt. Der axiale Bauraum für die Mehrfach-Ritzelanordnung wird auf der Innenseite durch den Antreiberanschlag und die Laufrad-Speichen und auf der Außenseite vom Rahmenanschlag vorgegeben. In montiertem Zustand schlägt das größte Ritzel der Mehrfach-Ritzelanordnung in axialer Richtung an dem Antreiberanschlag an. Die größten Ritzel des Ritzel-Pakets können dem Verlauf der Laufrad-Speichen folgen (man spricht auch von überhängenden Ritzeln). Gleichzeitig ist auch das zur Verfügung stehende Material der Ritzel in radialer Richtung beschränkt, vor allem bei besonders kleinen Ritzeln mit elf, zehn oder neun Zähnen. Diese haben einen kleinen Außendurchmesser, aber im Verhältnis dazu einen relativ großen Innendurchmesser, so dass die Materialhöhe in radialer Richtung gering ist.

Die erhöhte Anzahl von Ritzeln verlangt auch nach einer kostengünstigen Fertigung. Es sind kostengünstige Fertigungsverfahren bekannt bei denen gestanzte Einzelritzel in einem anschließenden Montageschritt miteinander verbunden werden, z. B. mit Steckverbindung, wie in der DE 10 2013 012 066 der Anmelderin beschrieben ist.

Bei besonders kleinen Ritzeln ist allerdings in radialer Richtung nicht genügend Platz für eine solche Steckverbindung, die benachbarte Ritzel verbindet. Besonders stark ist dieses Problem ausgeprägt, wenn zwischen benachbarten Ritzeln nur ein geringer Zahnsprung liegt - also sich die Zähnezahl von benachbarten Ritzeln nur um einen oder zwei Zähne unterscheidet. Beispielsweise bei den drei kleinsten Ritzeln mit zehn, elf und zwölf Zähnen. Diese Ritzel sind in radialer Richtung besonders schmal ausgebildet und bieten nur wenig Platz für Verbindungselemente und ihre entsprechenden Öffnungen.

Es stellt sich daher die Aufgabe, eine Mehrfach-Ritzelanordnung mit einer erhöhten Anzahl von Ritzeln bereitzustellen, die zum einen einfach und günstig zu fertigen, und zum anderen auch für durchmesserkleine und schmale Ritzel geeignet ist.

Gelöst wird diese Aufgabe durch eine Mehrfach-Ritzelanordnung zur drehmomentübertragenden Montage auf einem Antreiber mit einem Mitnahmeprofil und zum Eingriff in eine Fahrradkette nach Anspruch 1. Dokument EP2826701A1 offenbart die Präambel des Anspruchs 1.

Die Mehrfach-Ritzelanordnung weist eine Mehrzahl von benachbarten Ritzeln mit einer jeweils unterschiedlichen Anzahl von Zähnen auf. Entsprechend der unterschiedlichen Zähnezahl verfügen die benachbarten Ritzel auch über unterschiedlich große Außendurchmesser. Mit einer steigenden Anzahl von Zähnen steigt der Außendurchmesser und umgekehrt. Mindestens ein erstes Ritzel der Mehrzahl von benachbarten Ritzeln weist einen ersten Innendurchmesser auf, der größer bemessen ist, als ein Außendurchmesser eines Profilgrundes des Mitnahmeprofils des Antreibers. Mindestens ein zweites Ritzel der Mehrzahl von benachbarten Ritzeln weist einen zweiten Innendurchmesser auf, der kleiner bemessen ist, als der Außendurchmesser des Profilgrundes des Mitnahmeprofils des Antreibers. Das erste Ritzel und das zweite Ritzel sind durch Schweißen miteinander verbunden.

Vorteilhaft ist, dass das zweite Ritzel aufgrund seines gegenüber dem Antreiber verkleinerten Innendurchmessers eine besonders kleine Anzahl von Zähnen ermöglicht. Gleichzeitig benötigt die Schweißverbindung zwischen dem ersten und zweiten Ritzel nur wenig Platz, so dass der zur Verfügung stehende Bauraum in axialer und radialer Richtung eingehalten werden kann. Die Maße der miteinander verschweißten Ritzel weichen kaum von denen eines einstückig gefertigten, insbesondere gefrästen Ritzelpakets ab. Eine Schweißverbindung ist aber leichter und kostengünstiger zu fertigen und zu fügen.

Mittels des Mitnahmeprofils des Antreibers kann die Mehrfach-Ritzelanordnung drehmomentübertragend mit diesem in Eingriff gebracht werden. Das Mitnahmeprofil des Antreibers weist einen Profilgrund und über den Grund hinausragende Profilerhebungen auf. Das Mitnahmeprofil des Antreibers weist entsprechend entlang seines Grunds einen kleineren Außendurchmesser auf, als entlang seiner Erhebungen.

Erfindungsgemäss, wird das erste Ritzel direkt mit dem zweiten Ritzel verschweißt.

Erfindungsgemäss, weist das erste Ritzel R3 einen ersten Flanschabschnitt auf. Der erste Flanschabschnitt des ersten Ritzels R3 stößt an eine im Wesentlichen flache Rückseite des zweiten Ritzels R2. Das erste und das zweite Ritzel sind entlang des ersten Flanschabschnitts miteinander verschweißt.

Ferner oder alternativ, jedoch nicht beansprucht, weist das zweite Ritzel R2 einen zweiten Flanschabschnitt auf.

Der zweite Flanschabschnitt stößt an eine im Wesentlichen flache Vorderseite des ersten Ritzels. Das erste und zweite Ritzel sind entlang des zweiten Flanschabschnitts miteinander verschweißt.

Somit sind Ausführungen denkbar, jedoch nicht beansprucht, bei denen sich der Flanschabschnitt entweder vom größeren Ritzel R3 zum kleineren Ritzel R2 oder vom kleineren Ritzel R2 zum größeren Ritzel R3 erstreckt, oder sich zwei Flanschabschnitte in entgegengesetzte Richtungen zwischen den Ritzeln erstrecken, und jeweils auf eine flache Seite des benachbarten Ritzels stoßen. Damit die beiden Flanschabschnitte nicht kollidieren, müssten diese entweder in radialer Richtung versetzt zueinander oder in Umfangsrichtung unterbrochen und versetzt zueinander angeordnet sein (diese Ausführungsform ist in den Figuren nicht dargestellt).

Gemäß einer weiteren nicht beanspruchten Ausführungsform der Mehrfach-Ritzelanordnung weist das erste Ritzel R3 einen ersten Flanschabschnitt und das zweite Ritzel R2 einen zweiten Flanschabschnitt auf. Das erste und zweite Ritzel sind benachbart. Der erste Flanschabschnitt des ersten Ritzels R3 und der zweite Flanschabschnitt des zweiten Ritzels R2 weisen aufeinander zu. Das erste Ritzel R3 ist entlang des ersten Flanschabschnitts mit dem zweiten Ritzel R2 entlang des zweiten Flanschabschnitts durch Schweißen verbunden.

Anders als bei den vorhergehenden Ausführungen, bei denen ein Flanschabschnitt mit der flachen Ritzelseite verschweißt wird, werden hier benachbarte Ritzel jeweils entlang ihrer Flanschabschnitte verschweißt. Vorteilhaft bei dieser Ausgestaltung ist, dass aufgrund der beiden aufeinander zuweisenden Flanschabschnitte die Schweißnaht von den Ritzeln beabstandet ist. Insbesondere liegt die Schweißnaht mittig zwischen den beiden zu verbindenden Ritzeln und ist somit gut mit dem Schweißgerät erreichbar. Dieser Vorteil besteht unabhängig von der Größe der Innendurchmesser der Ritzel und ist auch auf andere als die erfindungsgemäße Mehrfach-Ritzelanordnung anwendbar, unabhängig davon, ob sehr kleine Ritzel axial vor dem Antreiber angeordnet sind oder nicht. Bei dieser Ausführung kann die Energiezufuhr im rechten Winkel erfolgen, was ideal ist, um eine gleichmäßige Schweißnaht zu erzeugen. Beispielsweise kann ein Laserstrahl L beim Laserschweißen im rechten Winkel auf die zu verbindenden Flanschabschnitte gerichtet werden. Bei dieser Laserausrichtung wird am wenigsten Energie benötigt und eine akkurate Ausrichtung von Schweißgerät und Schweißwerkzeugs ist am einfachsten zu realisieren.

Aus dem Stand der Technik bekannte Schweißverbindungen zwischen Ritzeln weisen keinen oder nur einen Flanschabschnitt an nur einem der beiden zu verbindenden Ritzel auf. Der Flanschabschnitt wird mit dem benachbarten, flachen Ritzel verbunden. Dadurch liegt die Schweißnaht in einer zwischen Flanschabschnitt und flachen Ritzel gebildeten Ecke, die mit dem Schweißgerät nur schwer zu erreichen ist. Das Schweißgerät, insbesondere das Laser-Schweißgerät, muss schräg auf diese Ecke gerichtet werden, um nicht ungewollt das flache Ritzel zu beschädigen. Ein schräger Einfallswinkel verkompliziert die Herstellung einer gleichmäßigen Schweißnaht.

Gemäß einer weiteren Ausführungsform weist das zweite Ritzel R2 einen dritten Flanschabschnitt auf. Über den dritten Flanschabschnitt wird ein drittes Ritzel R1 durch Schweißen mit dem zweiten Ritzel R2 verbunden. Der dritte Flanschabschnitt ist auf der Vorderseite des zweiten Ritzels R2 angeordnet.

Die Rückseite des zweiten Ritzels R2 kann entweder einen zweiten Flanschabschnitt aufweisen oder, entsprechend einer anderen Ausführungsform, flach bzw. frei von Flanschabschnitten sein.

Ferner weist das dritte Ritzel R1 einen Innendurchmesser auf, der ebenfalls kleiner bemessen ist, als der Außendurchmesser des Profilgrundes des Mitnahmeprofils des Antreibers. Das dritte Ritzel R1 kann auch als ein weiteres zweites Ritzel R2 angesehen werden, weil es sich ebenfalls vom ersten Ritzel R3 aufgrund seines gegenüber dem Antreiber kleineren Innendurchmessers unterscheidet. Mit anderen Worten kann die erfindungsgemäße Mehrfach-Ritzelanordnung zwei zweite Ritzel (R2 und R1) umfassen. Des Weiteren sind die Innendurchmesser des zweiten Ritzels R2 und des dritten Ritzels R1 gleich groß.

Ferner kann das dritte Ritzel R1 an seiner Rückseite einen vierten Flanschabschnitt aufweisen, entlang dessen es mit dem dritten Flanschabschnitt des zweiten Ritzels R2 durch Schweißen verbunden ist.

Ferner kann das erste Ritzel R3 einen fünften Flanschabschnitt aufweisen, mit dem ein viertes, nächstgrößeres Ritzel R4 durch Schweißen verbunden ist. Der fünfte Flanschabschnitt ist auf der Rückseite des ersten Ritzels R3 angeordnet. Die Vorderseite des ersten Ritzels R3 kann entweder einen ersten Flanschabschnitt aufweisen oder, entsprechend einer anderen Ausführungsform, flach bzw. frei von Flanschabschnitten sein.

Der oder die Flanschabschnitte der vorhergehenden Ausführungsformen erstrecken sich in axialer Richtung, also parallel zur Hinterradachse A. Der Flanschabschnitt erstreckt sich also in einem 90 Gradwinkel zum Ritzel. Durch die axiale Länge der Flanschabschnitte ergibt sich der axiale Abstand zwischen benachbarten Ritzeln. Jeder Flanschabschnitt weist ein freies Ende auf, das entweder in Richtung des nächstkleineren Ritzels (nach vorne) oder in Richtung des nächstgrößeren Ritzels (nach hinten) weist.

Ein Flanschabschnitt kann dabei auf unterschiedliche Art und Weise gefertigt werden. Denkbar wäre, ein flaches Ritzel zunächst durch Stanzen zu fertigen und in einem weiteren Schritt den Flansch durch Verformen oder Materialabtrag (Drehen, Fräsen o. ä.) herzustellen. Ritzel und Flansch können aber auch in nur einem Arbeitsschritt durch Umformen (Stanzen, Tiefziehen o. ä.) hergestellt werden. Falls nötig, können Folgearbeitsschritte für eine saubere Ritzelkontur sorgen.

Ferner erstreckt sich der Flanschabschnitt in Umfangsrichtung des Ritzels. Der Flanschabschnitt weist einen Durchmesser auf, der kleiner bemessen ist, als die Fußkreisdurchmesser der beiden zu verbindenden Ritzel. Dadurch wird sichergestellt, dass die Kette nicht mit dem Flanschabschnitt kollidiert, wenn sie mit den Ritzeln in Eingriff gebracht wird. Im Fall von aufeinander zuweisenden Flanschabschnitten, die miteinander verbunden werden, weisen beide Flanschabschnitte gleich große Durchmesser auf.

Ein Flanschabschnitt kann sich durchgehend in Umfangsrichtung des Ritzels erstrecken und einen geschlossenen Zylinder bilden. Alternativ könnte der Flanschabschnitt auch aus mehreren Kreissegmenten oder Vorsprüngen gebildet sein. Solche Kreissegmente oder Vorsprünge lassen sich besonders einfach durch Umbiegen des inneren Ritzeldurchmessers des zunächst flachen Ritzels herstellen. Eine Mehrfach-Ritzelanordnung kann sowohl durchgehende, als auch unterbrochene Flanschabschnitte kombinieren.

Gemäß einer weiteren nicht beanspruchten Ausführungsform der Mehrfach-Ritzelanordnung wird das erste Ritzel R3 nicht direkt, sondern indirekt mit dem zweiten Ritzel R2 verschweißt.

Insbesondere, jedoch nicht beansprucht, können das erste und das zweite Ritzel R3, R2 über ein rohrförmiges Element miteinander verbunden sein. Dafür wird jeweils das erste Ritzel R3 und das zweite Ritzel R2 durch Schweißen mit dem rohrförmigen Element verbunden.

In einer nicht beanspruchten Ausführung, können auch weitere Ritzel, insbesondere ein drittes Ritzel R1, mit dem rohrförmigen Element durch Schweißen verbunden sein.

Das rohrförmige Element ist ferner gestuft ausgebildet. Es weist einen ersten Abschnitt mit einem größeren Innendurchmesser und einen zweiten Abschnitt mit einem kleineren Innendurchmesser auf.

Das mit den Ritzeln verschweißte rohrförmige Element wird dann auf den Antreiber bzw. den dazwischenliegenden Adapter geschoben. Der Innendurchmesser des rohrförmigen Elements muss auf den Außendurchmesser des Antreibers bzw. des Adapters abgestimmt sein. Die Materialstärke des rohrförmigen Elements wird also zum Ritzel gerechnet, so dass der Innendurchmesser des rohrförmigen Elements als der anspruchsgemäße Innendurchmesser des Ritzels verstanden wird. Der Innendurchmesser des ersten Abschnitts des rohrförmigen Elements ist größer als der Grund des Mitnahmeprofils des Antreibers bemessen. Entsprechend ist der kleinere Innendurchmesser des rohrförmigen Elements kleiner als der Profilgrund des Mitnahmeprofils des Antreibers bemessen.

Vorteilhaft bei dieser nicht beanspruchten Ausführungsform ist, dass keine Flanschabschnitte zwischen den Ritzeln benötigt werden, sondern die flachen Ritzel mit dem rohrförmigen Element verschweißt werden. Das erlaubt eine besonders kostengünstige Fertigung der Ritzel. Um die Verbindung zwischen Ritzel und rohrförmigem Element besonders stabil zu gestalten, wäre es aber auch denkbar, die Auflagefläche des Ritzels am Rohr zu erhöhen, z. B. durch einen Falz entlang des Innendurchmessers.

Die verschweißten Teile bilden ein zusammenhängendes, nicht mehr lösbares Cluster mit mindestens einem ersten und zweiten Ritzel. Insbesondere werden die drei kleinsten Ritzel einer Mehrfach-Ritzelanordnung direkt durch Schweißen zu einem Cluster verbunden. Bei den kleinsten Ritzeln sind die Vorteile der Erfindung gegenüber dem Stand der Technik besonders groß. Selbstverständlich können aber auch mehr als drei Ritzel oder alle Ritzel der Mehrfach-Ritzelanordnung durch Schweißen miteinander verbunden sein. Ebenfalls ist es denkbar, die oben genannten Ausführungsbeispiele mit anderen Fügetechniken zu kombinieren.

Gemäß einer Ausführungsform der erfindungsgemäßen Mehrfach-Ritzelanordnung ist ein drittes Ritzel R1 mit dem zweiten Ritzel R2 mittels separater Verbindungsmittel verbunden. Alternativ kann auch ein viertes Ritzel R4 mit dem ersten Ritzel R3 mittels separater Verbindungsmittel verbunden sein. Ferner kann auch ein drittes Ritzel R1 mit dem zweiten Ritzel R2 und ein viertes Ritzel R4 mit dem ersten Ritzel R3 mittels separater Verbindungsmittel verbunden sein. Neben der oben beschriebenen direkten Schweißverbindung zwischen dem ersten und zweiten Ritzel gibt es also noch mindestens eine weitere Verbindung mittels separater Verbindungsmittel.

Insbesondere sind die separaten Verbindungsmittel als sich parallel zur Hinterradachse erstreckende Haltebolzen ausgebildet. Die Haltebolzen werden in Öffnungen in den Ritzeln eingepresst. Die Öffnungen sind in einem Lochkreis angeordnet. Zwei benachbarte Ritzel weisen jeweils einen durchmessergleichen Lochkreis mit einer Vielzahl von Öffnungen auf.

Ferner weist das vierte Ritzel einen inneren Lochkreis mit Öffnungen und einen äußeren Lochkreis mit Öffnungen auf. Wird ein Ritzel sowohl mit einem durchmesserkleineren benachbarten Ritzel als auch mit einem durchmessergrößeren benachbarten Ritzel verbunden, muss dieses Ritzel zwei Lochkreise aufweisen. Einen inneren Lochkreis, der zur Verbindung mit dem benachbarten kleineren Ritzel dient und einen äußeren Lochkreis, der zur Verbindung mit dem benachbarten größeren Ritzel dient. Eine solche Verbindung mit zwei voneinander beabstandeten Lochkreisen wirkt sich vorteilhaft auf die Kraftübertragung zwischen den benachbarten Ritzeln aus. Die Antriebskraft wird von der Kette auf ein mit der Kette in Eingriff stehendes Ritzel der Anordnung übertragen und von diesem Ritzel über die benachbarten Ritzel bis zu einem drehmomentübertragend mit dem Antreiber in Eingriff stehenden Ritzel übertragen. Zwei voneinander beabstandete Lochkreise sind allerdings nur möglich, wenn das Ritzel in radialer Richtung genügend Platz zur Verfügung stellt. Bei durchmesserkleinen Ritzeln ist dies nicht immer der Fall.

Ferner weist die erfindungsgemäße Mehrfach-Ritzelanordnung mindestens ein Ritzel mit einem Innenprofil auf, das mit dem Mitnahmeprofil des Antreibers in Eingriff gebracht werden kann und der Drehmomentübertragung dient. Als drehmoment-übertragendes Ritzel eignen sich besonders das größte oder eines der größten Ritzel der Ritzelanordnung.

Gemäß einer nicht beanspruchten Ausführungsform kann zumindest ein Ritzel der Ritzelanordnung eine Abfolge von einem dünnen Zahn, einem dicken Zahn und einem weiteren dünnen Zahn aufweisen. Dabei ist ein dicker Zahn in axialer Richtung so dick ausgebildet, dass er in ein Außenlaschenpaar der Kette eingreifen kann, nicht aber in ein Innenlaschenpaar. Dies wirkt sich positiv auf die Kettenführung aus. Die Abfolge kann sich entlang des Umfangs eines Ritzels mehrfach wiederholen. Bei Ritzeln mit gerader Zähnezahl können auch alle Zähne im Wechsel dünn und dick ausgebildet sein. Die axiale Verdickung kann entweder auf beiden Seiten des Ritzels ausgeprägt sein, oder nur an einer. Vorzugsweise ist die Verdickung nur an der Rückseite des Ritzels angeordnet. Gerade an den beiden größten Ritzeln ist sie von besonderer Bedeutung, weil dort der Kettenschräglauf am stärksten ausgebildet ist. Durch die verbesserte Führung der Kette werden die Negativfolgen des Kettenschräglaufs minimiert.

Gemäß einer nicht beanspruchten Ausführungsform kann zumindest ein Teil der benachbarten Ritzel integral, insbesondere durch Fräsen, gefertigt sein. Eine Mehrfach-Ritzelanordnung mit einer Kombination aus integral gefertigten Ritzeln, miteinander verschweißten Ritzeln und mittels separater Verbindungsmittel (Haltebolzen, Spider, Nieten o. ä.) verbundenen Ritzeln ist ebenfalls denkbar.

Ein weiterer Aspekt der Erfindung betrifft einen Fahrradantrieb, der eine erfindungsgemäße Mehrfach-Ritzelanordnung, eine Fahrradkette und eine Kettenringanordnung mit mindestens einem Kettenring umfasst. Insbesondere umfasst der Antrieb eine Mehrfach-Ritzelanordnung mit zwölf Ritzeln (R1-R12) und eine Kettenringanordnung mit zwei Kettenringen. Ferner kann ein solcher Fahrradantrieb ein elektrisch gesteuertes Schaltwerk (RD) und/oder einen elektrisch gesteuerten Umwerfer (FD) aufweisen. Diese werden vorzugsweise kabellos gesteuert.

### Kurzbeschreibung der Zeichnungen:

- Fig. 1: Fahrrad mit einem erfindungsgemäßen Fahrradantrieb und einer erfindungsgemäßen Mehrfach-Ritzelanordnung
- Fig. 2: Perspektivische Teilansicht einer ersten Ausführungsform einer nicht erfindungsgemäßen Mehrfach-Ritzelanordnung ohne Antreiber
- Fig. 3: Schnittdarstellung der ersten Ausführungsform aus Fig. 2 auf einem Antreiber montiert
- Fig. 4a: Perspektivische Ansicht des Ritzels R3
- Fig. 4b: Perspektivische Ansicht der Ritzel R3 und R2 gefügt
- Fig. 4c: Perspektivische Ansicht des gefügten Clusters (R1, R2, R3)
- Fig. 5: Seitenansicht der Ritzel R1, R2 und R3 nicht gefügt
- Fig. 6: Seitenansicht der Ritzel R1, R2 und R3 aus Fig. 5 gefügt
- Fig. 7: Schnittdarstellung der gefügten Ritzel aus Fig. 6
- Fig. 8: Seitenansicht einer nicht beanspruchten alternativen Ausführungsform nicht gefügt
- Fig. 9: Schnittdarstellung einer erfindungsgemässen zweiten Ausführungsform auf einem Antreiber montiert
- Fig. 10: Detailansicht eines Ausschnitts aus Fig. 9
- Fig. 11: Schnittdarstellung der drei kleinsten Ritzel gefügt
- Fig. 12: Perspektivische Ansicht der drei kleinsten Ritzel einer nicht beanspruchten dritten Ausführungsform
- Fig. 13: Explosionsdarstellung der Ritzel aus Fig. 12
- Fig. 14: Schnittdarstellung der drei kleinsten Ritzel aus Fig. 12
- Fig. 15: Detailansicht eines Ausschnitts aus Fig. 14
- Fig. 16: Perspektivische Rückansicht einer nicht beanspruchten vierten Ausführungsform
- Fig. 17: Perspektivische Vorderansicht der vierten Ausführungsform ohne Ritzel R1
- Fig. 18: Perspektivische Vorderansicht der vierten Ausführungsform
- Fig. 19: Schnittdarstellung der vierten Ausführungsform
- Fig. 20: Vergrößerte Teilansicht aus Fig. 19.

### Detaillierte Beschreibung der bevorzugten Ausführungsformen

Die im Folgenden verwendeten Richtungsangaben vorne und hinten beziehen sich auf die Vorder- und Rückseite der Ritzel. Die Vorderseite eines Ritzels weist zum nächstkleineren Ritzel. Die Rückseite eines Ritzels zum nächstgrößeren Ritzel. Axial bezieht sich auf die Hinterradachse bzw. die Drehachse der Mehrfach-Ritzelanordnung. Die Zähne sind radial außen am Ritzel angeordnet. Der Außendurchmesser eines Ritzels ist das radial äußere Ende, der Innendurchmesser das radial innere Ende des Ritzels. Die Figuren zeigen exemplarisch und zur besseren Übersichtlichkeit nur einen Teil der Ritzel der Mehrfach-Ritzelanordnung.

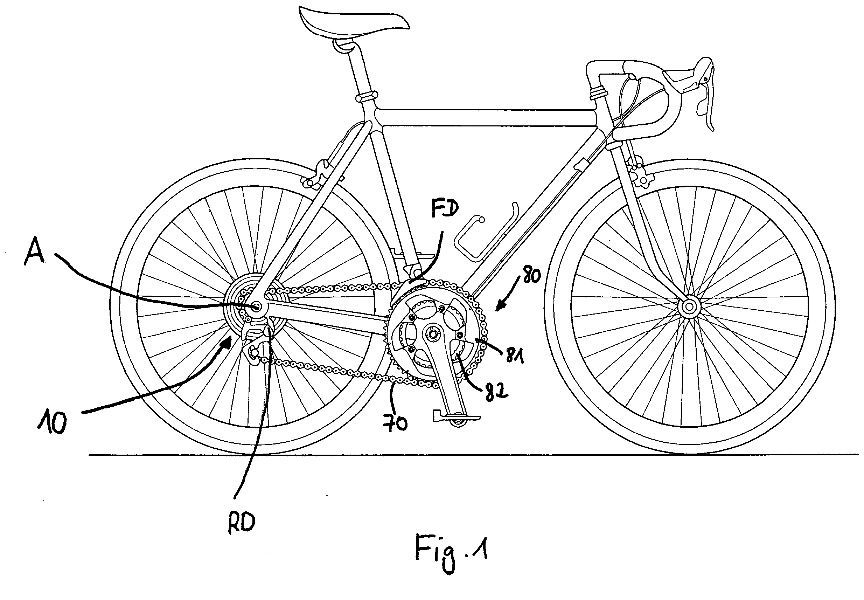

Figur 1 zeigt ein Fahrrad mit einer erfindungsgemäßen Mehrfach-Ritzelanordnung 10 und einem erfindungsgemäßen Fahrradantrieb. Der Fahrradantrieb besteht aus einer Kettenblatt-Anordnung 80, die ein kleines Kettenblatt 82 und ein großes Kettenblatt 81 umfasst, einer Mehrfach-Ritzelanordnung 10 und einer Fahrradkette 70. Die Mehrfach-Ritzelanordnung 10 umfasst eine erhöhte Anzahl von benachbarten Ritzeln R, insbesondere zwölf Ritzeln R1 bis R12, die hier nur schematisch dargestellt sind. Die Ritzel R der Ritzelanordnung 10 weisen unterschiedliche Zähnezahlen auf und sind in einem vorgegebenen axialen Abstand zueinander angeordnet. Die Fahrradkette 70 steht mit den Zähnen eines der Kettenblätter, in dem gezeigten Fall dem großen Kettenblatt 82 der Kettenblatt-Anordnung 80 und den Zähnen eines der benachbarten Ritzel R der Mehrfach-Ritzelanordnung 10 in Eingriff. Mittels der Fahrradkette 70 wird Kraft von der Kettenblatt-Anordnung 80 auf die hintere Mehrfach-Ritzelanordnung 10 und von dort über den Antreiber auf die Hinterradnabe übertragen. Der Umwerfer FD und/oder das Schaltwerk RD können dabei entweder mechanisch oder elektrisch bedient werden. Im gezeigten Ausführungsbeispiel sind sowohl der elektrische Umwerfer FD, als auch das elektrische Schaltwerk RD mit einer oder mehreren am Lenker montierten Schaltvorrichtungen insbesondere kabellos angesteuert. Bei einer Kettenblatt-Anordnung mit nur einem Kettenblatt entfällt der Umwerfer FD.

Die erfindungsgemäße Schaltvorrichtung ist nicht nur für ein dargestelltes Rennrad geeignet, sondern kann an einer Vielzahl von Fahrradtypen, wie Mountainbikes, Tourenräder oder E-Bikes zum Einsatz kommen. Je nach Antriebsart sind auch andere Zähnezahlen, als die in den folgenden Figuren dargestellten, möglich. Für einen Antrieb mit nur einem vorderen Kettenblatt und dreizehn hinteren Ritzeln sind insbesondere neun, zehn oder elf Zähne auf dem kleinsten Ritzel und 36 Zähne auf dem größten Ritzel möglich. Antriebe für Mountainbikes verfügen üblicherweise über eine noch größere Spreizung. Bei Ritzel-Anordnungen mit elf Ritzeln sind insbesondere zehn Zähne am kleinsten Ritzel und 42 Zähne auf dem größten Ritzel oder elf Zähne am kleinsten Ritzel und 46 Zähne auf dem größten Ritzel denkbar. Bei Anordnungen mit zwölf Ritzeln stellen zehn Zähne am kleinsten Ritzel und 50 Zähne am größten Ritzel oder elf Zähne am kleinsten und 55 Zähne am größten Ritzel eine sinnvolle Spreizung dar.

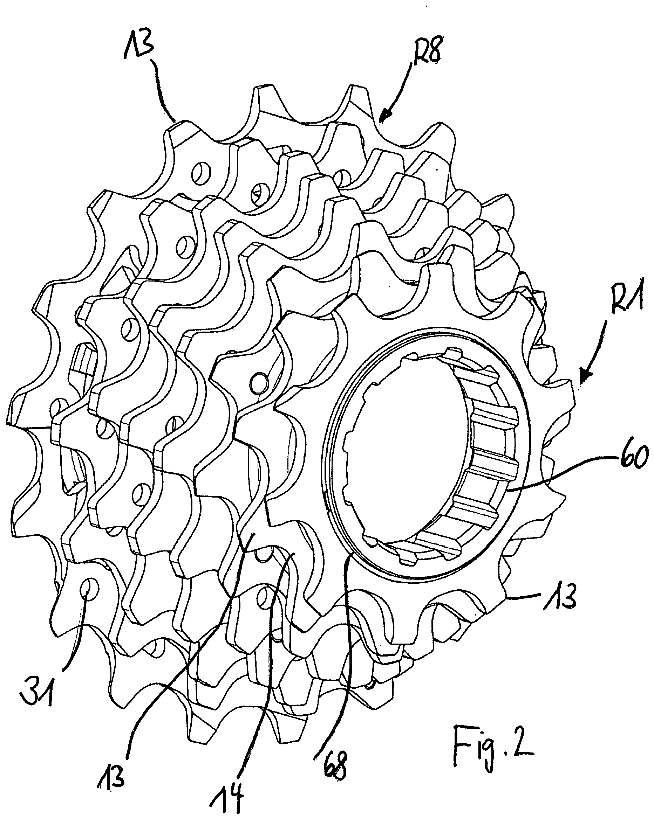

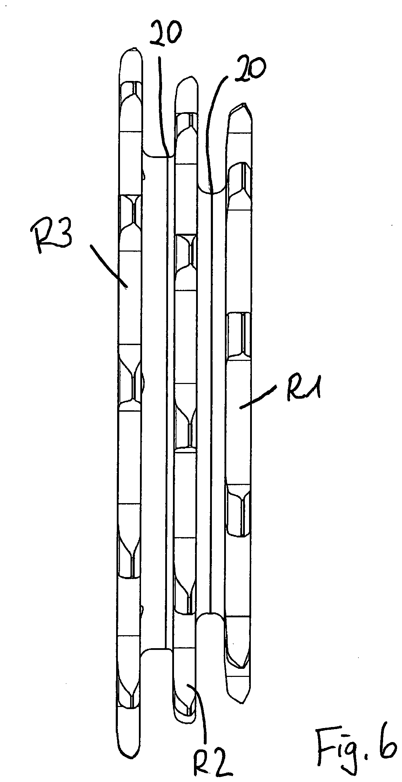

Figuren 2 bis 7 zeigen eine erste nicht beanspruchte Ausführungsform der Mehrfach-Ritzelanordnung.

Figur 2 zeigt eine perspektivische Vorderansicht der ersten Ausführungsform der Mehrfach-Ritzelanordnung ohne Antreiber. Exemplarisch ist nur ein Teil (R1 bis R8) der erhöhten Anzahl von insbesondere zwölf Ritzeln der Mehrfach-Ritzelanordnung dargestellt. Das Ritzel R1 ist das durchmesserkleinste Ritzel der Mehrfach-Ritzelanordnung mit zehn Zähnen 13. Das zweitkleinste Ritzel R2 weist elf Zähne auf, das drittkleinste Ritzel R3 zwölf Zähne. Zwischen den drei kleinsten Ritzeln R1, R2, R3 liegt also jeweils nur ein Zahnschritt, so dass sich deren Außendurchmesser nur geringfügig unterscheiden. Die Mehrfach-Ritzelanordnung kann mit dem Adapter 60 axial auf einem Antreiber fixiert werden.

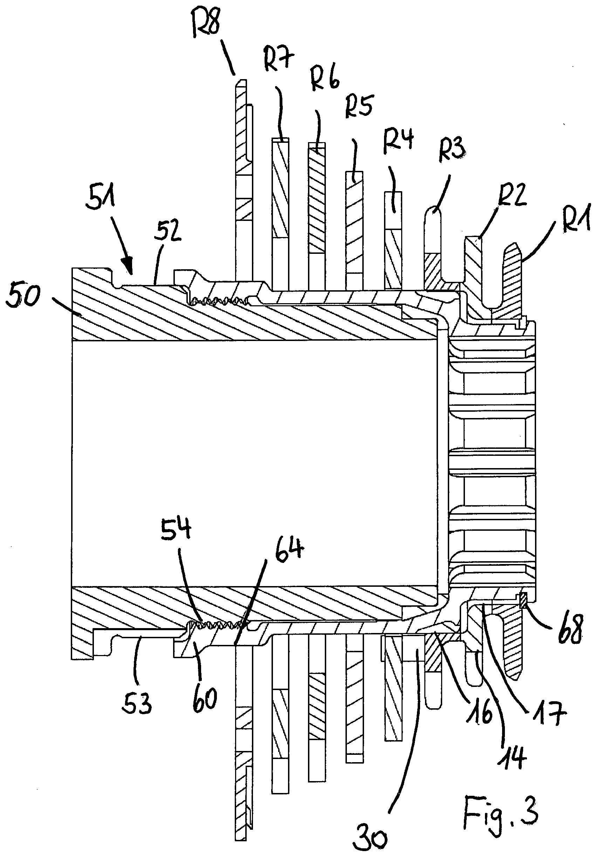

Figur 3 zeigt eine Schnittdarstellung der ersten Ausführungsform aus Fig. 2. Wobei die Mehrfach-Ritzelanordnung hier auf einem Antreiber 50 montiert dargestellt ist. Das Ritzel-Paket umfasst insbesondere zwölf benachbarte Ritzel (R1-R12) mit unterschiedlich großen Durchmessern und damit einhergehenden unterschiedlichen Zähnezahlen - gezeigt sind wiederum nur acht der zwölf Ritzel (R1 bis R8). Das größte, hier nicht gezeigte Ritzel R12, steht in drehmomentübertragendem Eingriff mit dem Antreiber 50, welcher das Drehmoment weiter auf eine hier nicht dargestellte Hinterradnabe überträgt. Dazu weist das drehmomentübertragende Ritzel ein Eingriffsprofil auf, das mit dem Mitnahmeprofil 51 am Antreiber 50 drehmomentübertragend in Eingriff bringbar ist. Das Mitnahmeprofil 51 des Antreibers 50 besteht aus einem Profilgrund 53 und Profilerhebungen 52. Die Profilerhebungen 52 erheben sich über dem Profilgrund 53 und weisen einen größeren Außendurchmesser als der Profilgrund 53 auf. Der Profilgrund 53 des Antreibers 50 dient im Folgenden als Referenz. So weist die erfindungsgemäße Mehrfach-Ritzelanordnung mindestens ein erstes Ritzel R3 auf, dessen Innendurchmesser 16 größer bemessen ist, als der Außendurchmesser des Profilgrunds 53. Auch ein nur geringfügig größerer Innendurchmesser 16 ist ausreichend, um dieses Merkmal zu erfüllen. Das zweite Ritzel R2 weist einen zweiten Innendurchmesser 17 auf, der kleiner bemessen ist, als der Außendurchmesser des Profilgrunds 53. Im gezeigten Fall ist der Innendurchmesser 17 sogar deutlich kleiner. Auch das kleinste bzw. dritte Ritzel R1 weist einen Innendurchmesser auf, der kleiner als der Außendurchmesser des Profilgrunds 53 bemessen ist. Die Innendurchmesser 17 der beiden Ritzel R1 und R2 sind gleich groß.

Alternativ könnte der Innendurchmesser des kleinsten Ritzels R1 noch kleiner ausgebildet sein. Entsprechend müsste der darunter liegende Adapter mit einer weiteren Stufe angepasst werden. Die beiden Ritzel R1 und R2 sind axial vor dem Antreiber 50 angeordnet. Nur so ist es möglich, besonders kleine Ritzel mit elf, zehn oder sogar neun Zähnen zu verbauen.

Die Verbindung zwischen dem durchmessergrößeren ersten Ritzel R3 und dem benachbarten durchmesserkleineren zweiten Ritzel R2 ist besonders kritisch, weil in radialer Richtung nur sehr wenig Platz für eine Anbindung besteht. Der Platz wird in radialer Richtung einerseits durch den Innendurchmesser 16 des ersten Ritzels R3 begrenzt und andererseits durch den Zahngrund 14 (oder den Fußkreisdurchmesser 15) des zweiten Ritzels R2. Die Erfindung löst dieses Problem durch eine kostengünstige und platzsparende Schweißverbindung zwischen dem ersten Ritzel R3 und dem zweiten Ritzel R2. Vorteilhaft bei Schweißverbindungen ist, dass sie sowohl in axialer, als auch radialer Richtung keinen oder nur äußerst wenig zusätzlichen Platz gegenüber der integralen Fertigung benötigen.

Der Adapter 60 wird mit seinem Innengewinde 64 auf das entsprechende Außengewinde 54 des Antreibers 50 geschraubt. Ein zwischen dem kleinsten Ritzel R1 und dem Ende des Adapters 60 angebrachter Sprengring 68 verhindert das axiale Abrutschen der Mehrfach-Ritzelanordnung von dem Adapter 60. Der Adapter 60 weist einen kleineren Außendurchmesser und der Sprengring 68 einen größeren Außendurchmesser als der Innendurchmesser des kleinsten Ritzels R1 auf. Der Sprengring 68 sitzt in einer umlaufenden Nut des Adapters 60. Somit ist das Ritzel-Paket auf dem Antreiber 50 in axialer Richtung fixiert.

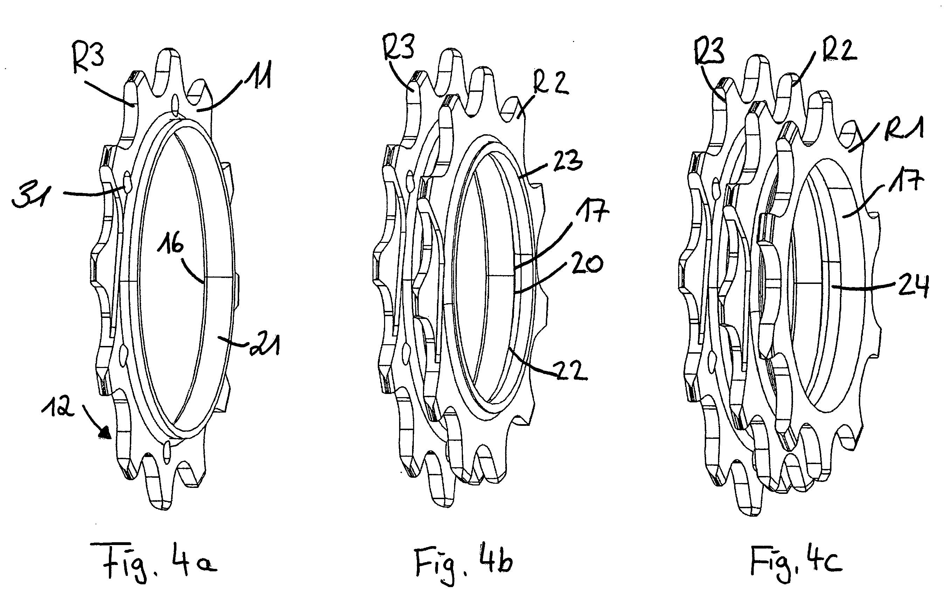

Die Figuren 4 bis 7 zeigen die Ritzel R1-R3 in verschieden Fügestadien. Das erste Ritzel R3 weist auf seiner Vorderseite 11 einen ersten Flanschabschnitt 21 auf. Die Rückseite 12 ist frei von Flanschabschnitten. Das zweite Ritzel R2 weist an seiner Rückseite 12 einen zweiten Flanschabschnitt 22 auf. Der erste Flanschabschnitt 21 und der zweite Flanschabschnitt 22 weisen aufeinander zu und haben gleich große Durchmesser. Das zweite Ritzel R2 weist ferner auf seiner Vorderseite 11 einen dritten Flanschabschnitt 23 auf. Das dritte Ritzel R1 weist auf seiner Rückseite 12 einen vierten Flanschabschnitt 24 auf. Auch der dritte Flanschabschnitt 23 und der vierte Flanschabschnitt 24 weisen aufeinander zu und haben gleich große Durchmesser. Die Länge der Flanschabschnitte kann je nach gewünschtem Abstand zwischen den Ritzeln variieren. Der erste Flanschabschnitt 21 ist etwas länger als die übrigen, damit die Schweißnaht nicht mit dem Ende des darunter anzubringenden Adapters 60 kollidiert. Die Ritzel R1 bis R3 werden gefügt, indem jeweils zwei benachbarte Ritzel entlang ihrer aufeinander zuweisenden Flanschabschnitte miteinander verschweißt werden. Auf diese Weise bildet sich eine umlaufende Schweißnaht 20 zwischen den Ritzeln R3 und R2 entlang des ersten und des zweiten Flanschabschnitts 21, 22 und eine weitere Schweißnaht 20 zwischen den Ritzeln R2 und R1 entlang des dritten und vierten Flanschabschnitts 23, 24.

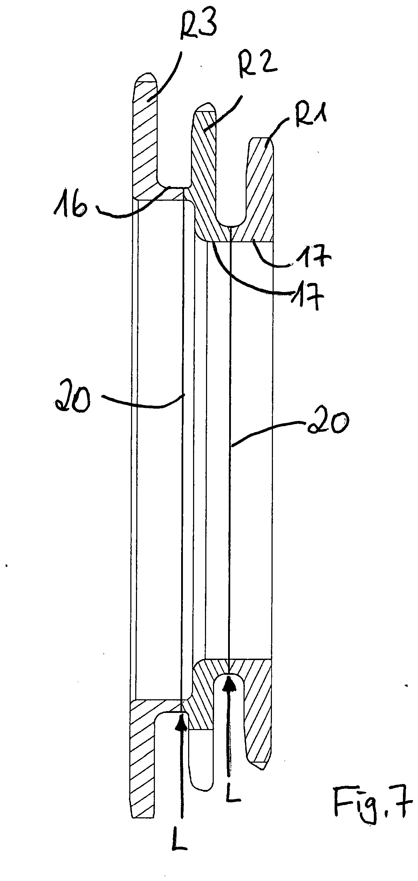

In Figur 7 ist der Einfallwinkel des Laserstrahls L mit Pfeilen eingezeichnet. Die aufeinander zuweisenden Flanschabschnitte erlauben die vorteilhafte, rechtwinklige Ausrichtung des Lasers gegenüber dem Werkstück.

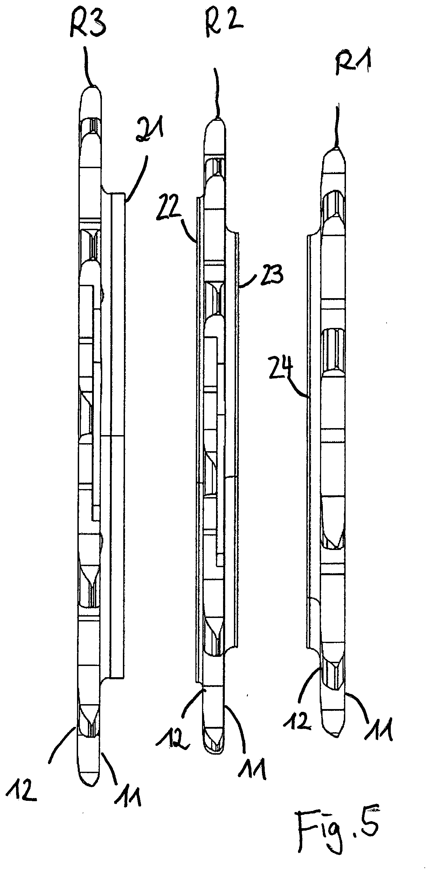

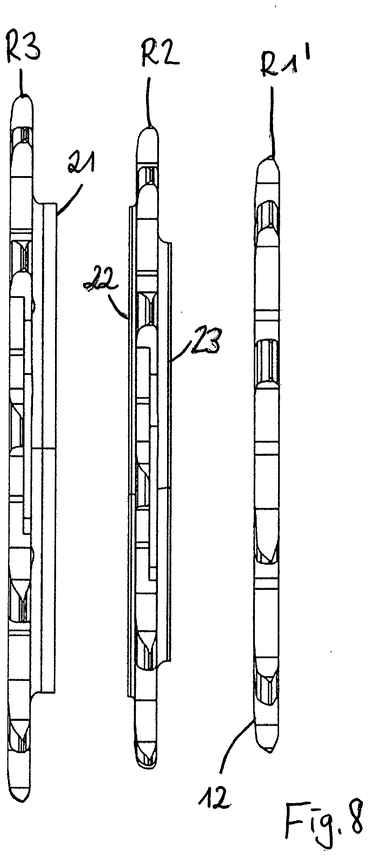

Figur 8 zeigt eine nicht beanspruchte alternative erste Ausführungsform, die sich von Figur 5 bezüglich des kleinsten Ritzels R1' unterscheidet. Im Gegensatz zu Ritzel R1 im vorherigen Ausführungsbeispiel ist dieses Ritzel R1' beidseitig flach und ohne Flanschabschnitte ausgebildet. Der dritte Flanschabschnitt 23 des zweiten Ritzels R2 stößt auf die flache Rückseite 12 des kleinsten Ritzels R1' und wird mit diesem verschweißt. In diesem Fall muss der Laserstrahl schräg ausgerichtet werden, um die in der Ecke gelegene Schweißnaht zu fertigen. Die Länge des Flanschabschnitts 23 bestimmt gleichzeitig den Abstand zwischen Ritzel R2 und R1'.

In einem ersten Arbeitsschritt werden die Ritzel R1, R2 und R3 und die Flanschabschnitte hergestellt. In einem zweiten Arbeitsschritt werden der erste und der zweite Flanschabschnitt 21, 22 miteinander verschweißt - also die Ritzel R3 und R2 gefügt. In einem dritten Arbeitsschritt werden die Ritzel R1 und R2 entlang ihrer Flanschabschnitte 23, 24 miteinander verschweißt. Laser-Schweißen ist eine bevorzugte Schweißtechnik. Dazu werden jeweils zwei benachbarte Ritzel oder alle drei zu verbindenden Ritzel auf einem Schweißwerkzeug befestigt. Das Schweißwerkzeug wird zusammen mit den zu verbindenden Ritzeln um die eigene Achse gedreht. Der Strahl L des Laser-Schweißgeräts wird in einem rechten Winkel auf die zu fügenden Flächen gerichtet und bildet aufgrund der Drehung eine umlaufende Schweißnaht 20.

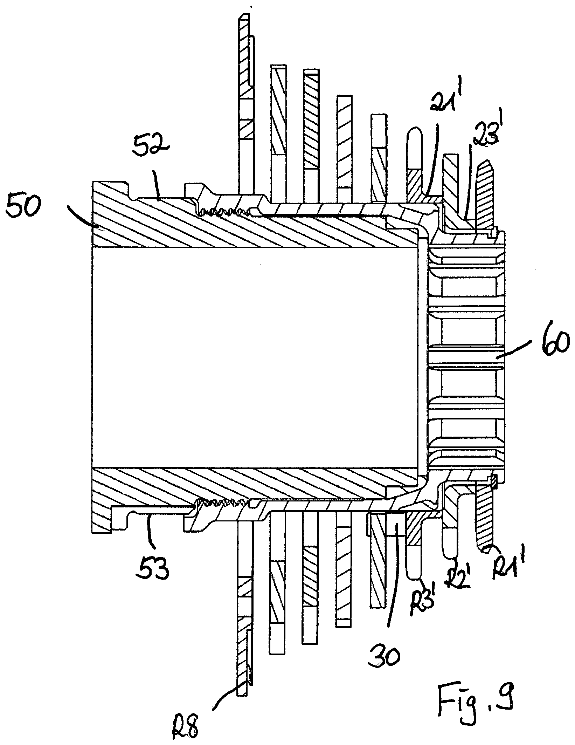

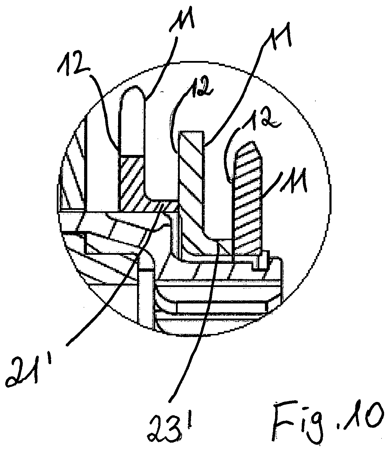

Figuren 9 bis 11 zeigen eine zweite Ausführungsform der erfindungsgemäßen Mehrfach-Ritzelanordnung. Die Schnittdarstellung in Figur 9 stellt wieder nur einen Teil der Ritzel R1 bis R8 der Mehrfach-Ritzelanordnung dar. Diese ist wie auch in Figur 3 mit Hilfe des Adapters 60 auf dem Antreiber 50 montiert.

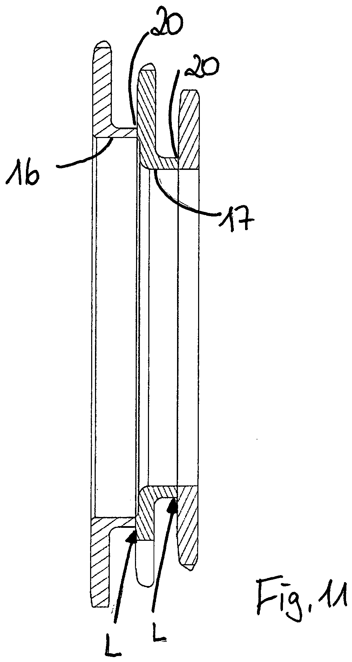

Die zweite Ausführungsform unterscheidet sich von der ersten insofern, dass das erste Ritzel R3' und das zweite Ritzel R2' jeweils nur einen Flanschabschnitt 21', 23' auf ihrer Vorderseite 11 aufweisen. Die Rückseiten der Ritzel R2' und R3' sind flach und ohne Flanschabschnitt ausgebildet. Der erste Flanschabschnitt 21' des ersten Ritzels R3' erstreckt sich axial in Richtung des nächstkleineren Ritzels R2' und stößt gegen dessen flache Rückseite 12. Ritzel R3' und R2' werden verbunden, indem der erste Flanschabschnitt 21' des ersten Ritzels R3' mit der Rückseite 12 des zweiten Ritzels R2' verschweißt wird. Gleichermaßen erstreckt sich der dritte Flanschabschnitt 23' axial in Richtung des nächstkleineren Ritzels R1' und stößt gegen dessen flache Rückseite 12. Ritzel R2' und R1' werden entlang des dritten Flanschabschnitts 23' miteinander verschweißt. Dazu wird ein Laserstrahl L in einem schrägen Einfallswinkel auf die jeweilige Verbindungsstelle gerichtet, so dass die zu verbindenden Ritzel nicht beschädigt werden. Im verbundenen Zustand sind nur noch die Schweißnähte 20 an den Verbindungsstellen sichtbar (vgl. Fig. 11).

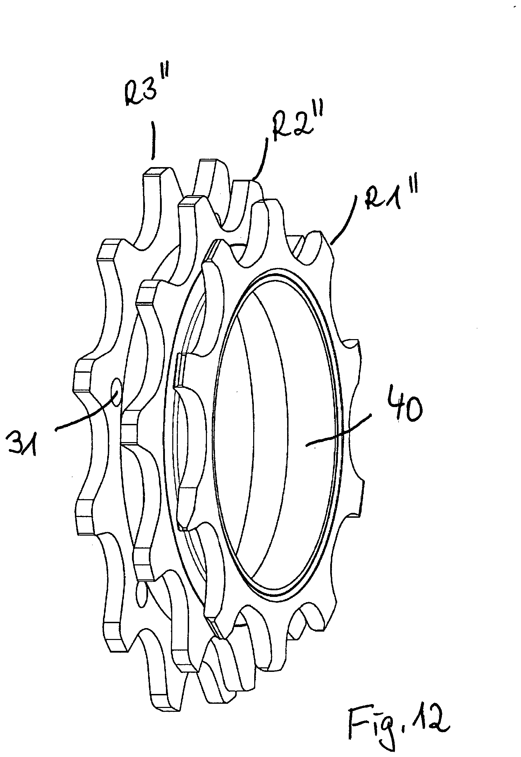

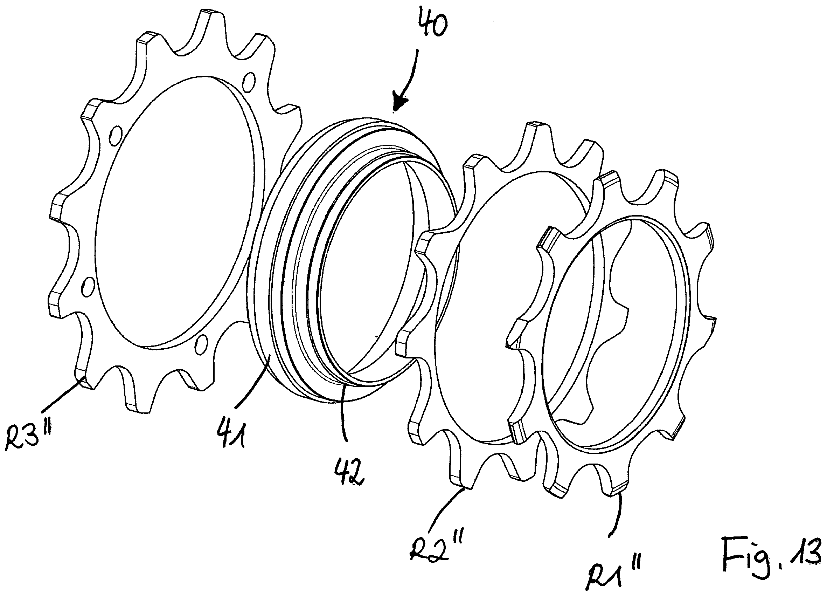

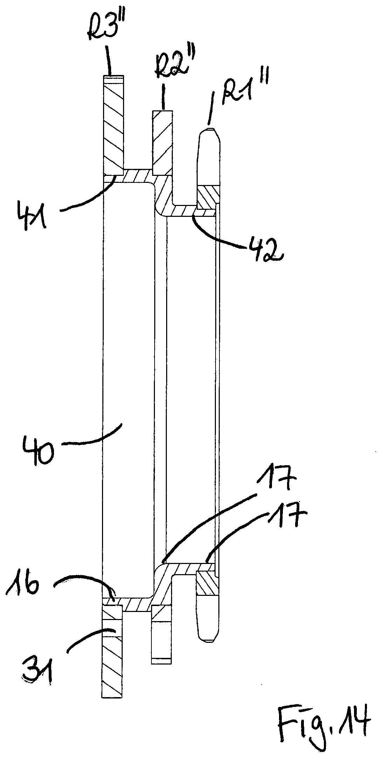

Figuren 12 bis 15 zeigen eine nicht beanspruchte dritte Ausführungsform der Mehrfach-Ritzelanordnung. Anders als bei den vorhergehenden Ausführungsformen werden die Ritzel hier nicht direkt sondern indirekt miteinander verbunden. Dazu werden die drei kleinsten Ritzel R1" bis R3" auf ein rohrförmiges Element 40 gesteckt und mit diesem durch Schweißen verbunden. Das rohrförmige Element 40 ist gestuft ausgebildet und umfasst einen durchmessergrößeren ersten Abschnitt 41 und einen durchmesserkleineren zweiten Abschnitt 42. Das rohrförmige Element 40 wird zusammen mit den Ritzeln auf den Adapter 60 (vgl. Figuren 3 und 5) gesteckt. Die Abmessungen des rohrförmigen Elements 40 orientieren sich an den Maßen des ebenfalls gestuft ausgebildeten Adapters 60.

Das erste Ritzel R3" wird im Bereich des ersten Abschnitts 41 mit dem Element 40 verschweißt. Der Innendurchmesser des ersten Abschnitts 41 entspricht dem Innendurchmesser 16 des ersten Ritzels R3". Das zweite Ritzel R2" wird im Übergangsbereich zwischen dem ersten Abschnitt 41 und dem zweiten Abschnitt 42 angebracht, so dass der Innendurchmesser des zweiten Abschnitts 42 dem Innendurchmesser 17 des zweiten Ritzels R2" entspricht. Das dritte Ritzel R1" ist im Bereich des zweiten Abschnitts 42 angebracht und weist den gleichen Innendurchmesser 17, wie das zweite Ritzel R2" auf.

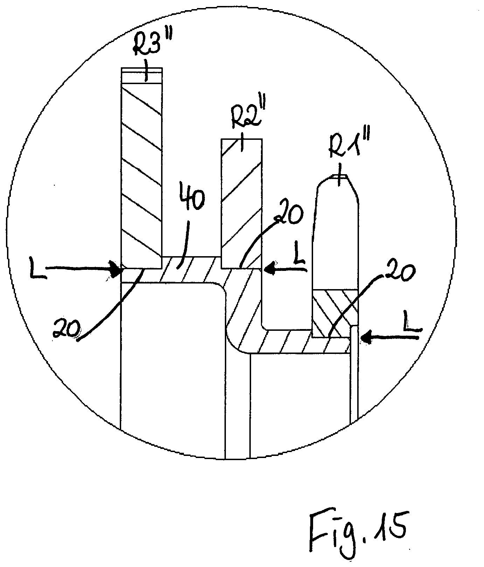

Auch bei diesem Ausführungsbeispiel werden das zu verbindende Ritzel und das rohrförmige Element 40 auf einem Schweißwerkzeug befestigt. Das Schweißwerkzeug wird zusammen mit den zu verbindenden Ritzeln um die eigene Achse gedreht. Der Strahl L des Laser-Schweißgeräts wird in einem rechten Winkel auf die zu fügenden Flächen gerichtet und bildet aufgrund der Drehung eine umlaufende Schweißnaht 20. Wie in Figur 15 gezeigt, wird der Laserstrahl L einmal von hinten (für R3") und zweimal von vorne (für R2" und R1") in einem rechten Winkel angesetzt. Um für den Laser frei zugänglich zu sein, wird in diesem Fall zunächst Ritzel R2" und danach das Ritzel R1" angeschweißt.

Grundsätzlich gilt, dass je nach Materialeigenschaften Laserstärke, Drehgeschwindigkeit und Schweißdauer variieren können. Es kann entweder eine durchgängige Schweißnaht 20 oder durch Punktschweißen eine unterbrochene Schweißnaht gebildet werden. Alternativ zum Laser-Schweißen wäre auch Reibschweißen denkbar. Grundsätzlich wäre anstatt einer Schweiß- auch eine Lötverbindung denkbar. Schweißverbindungen sind jedoch zu bevorzugen, weil diese ohne zusätzliches Lot auskommen und somit sehr flache Verbindungen erzeugt werden können.

In den vorhergehenden Ausführungsbeispielen werden lediglich die drei kleinsten Ritzel (R1 bis R3) direkt oder indirekt miteinander verschweißt. Die übrigen Ritzel R4 bis R12 werden durch in Öffnungen 31 eingepresste separate Verbindungsmittel 30 miteinander verbunden. Selbstverständlich könnten auch weniger, mehr oder alle Ritzel der Mehrfach-Ritzelanordnung durch Schweißen miteinander verbunden werden. Auch wäre es denkbar, anstelle der Haltebolzen 30 andere bekannte Verbindungsmittel zu wählen. Die Haltebolzen 30 sind ebenfalls nur exemplarisch und nicht vollständig in einigen Figuren eingezeichnet.

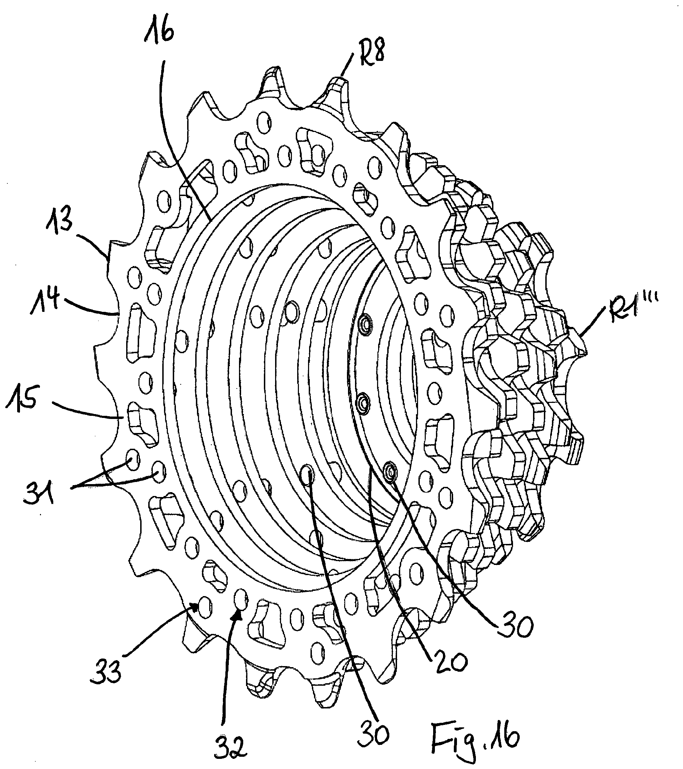

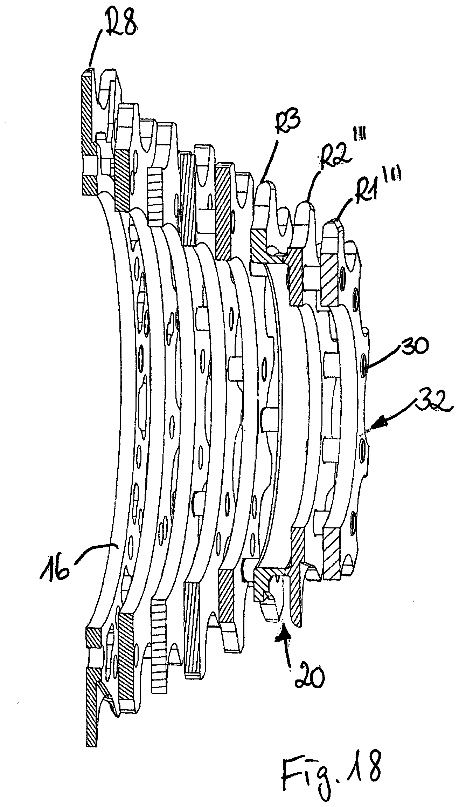

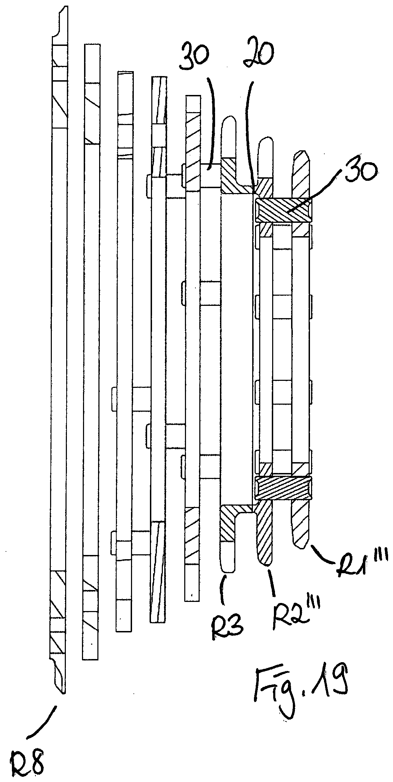

Zur weiteren Verdeutlichung zeigen die Figuren 16 bis 20 ein viertes Ausführungsbeispiel der erfindungsgemäßen Mehrfach-Ritzelanordnung. Diese unterscheidet sich von den vorherigen insofern, dass nur zwei der benachbarten Ritzel R, nämlich das erste Ritzel R3 und das zweite Ritzel R2'" miteinander verschweißt werden. Die restlichen Ritzel R werden mit Haltebolzen 30 verbunden.

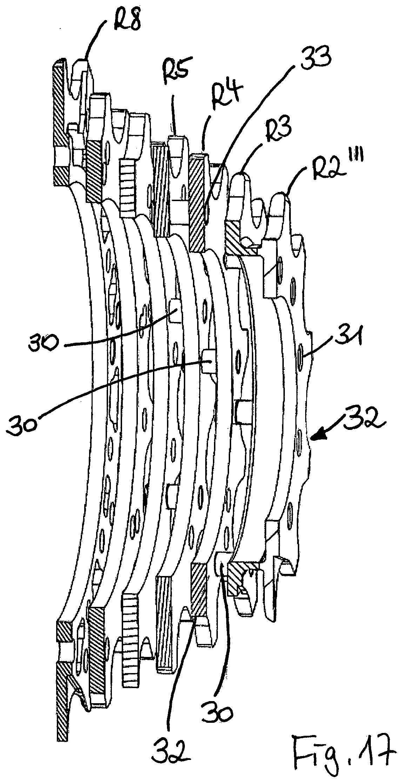

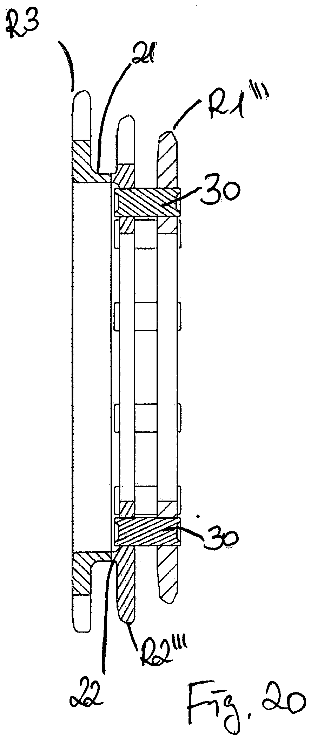

Für ein besseres Verständnis ist in Figur 17 das kleinste Ritzel nicht gezeigt, sondern nur die Ritzel R2'" bis R8. In den Figuren 16, 18 und 19 sind hingegen die Ritzel R1'" bis R8 gezeigt. Figur 20 zeigt eine vergrößerte Darstellung der drei kleinsten Ritzel R1'" bis R3.

Das erste Ritzel R3 weist, wie in der der ersten Ausführungsform, einen ersten Flanschabschnitt 21 auf, der sich in Richtung des benachbarten nächstkleineren Ritzels R2" erstreckt. Das zweite Ritzel R2" weist einen zweiten Flanschabschnitt 22 auf, der sich in Richtung des benachbarten nächstgrößeren Ritzels R3 erstreckt. Die beiden Flanschabschnitte 21, 22 weisen aufeinander zu und haben gleichgroße Durchmesser. Die beiden Ritzel R3 und R2'" werden entlang ihrer Flanschabschnitte 21, 22 verschweißt. Anders als im ersten Ausführungsbeispiel ist die Vorderseite von Ritzel R2'" frei von Flanschabschnitten. Das zweite Ritzel R2" weist stattdessen eine Vielzahl von Öffnungen 31 auf, die auf einem Lochkreis 32 gleichmäßig verteilt angeordnet sind. Auch das benachbarte kleinste Ritzel R1'" weist eine entsprechende Vielzahl von Öffnungen 31 auf, die ebenfalls auf einem gleichgroßen Lochkreis angeordnet sind. Die beiden Ritzel R1'" und R2"' werden mittels einer Vielzahl von Haltebolzen 30 verbunden. Jeder Haltebolzen 30 wird in zwei zueinander ausgerichteten Öffnungen 31 in die benachbarten Ritzel R1'" und R2'" eingepresst. Eine solche Verbindung mit separaten Mitteln 30 ist am kleinsten Ritzel R1'" möglich, weil nur ein Lochkreis für das eine benachbarte zweitkleinste Ritzel R2'" benötigt wird. Sowohl das Ritzel R1'" als auch das Ritzel R2'" bieten in radialer Richtung genügend Platz für einen Lochkreis 32.

Allerdings bietet das zweite Ritzel R2'" nicht genügend Platz für einen zweiten, äußeren Lochkreis, um auch noch das nächstgrößere erste Ritzel R3 mittels Haltebolzen zu verbinden. Dieser kritische Übergang von Ritzel R2 zu Ritzel R3 wird erfindungsgemäß durch eine Schweißverbindung gelöst.

Die größeren Ritzel R4 bis R12 bieten in radialer Richtung mehr Platz zwischen dem Ritzel-Innendurchmesser 16 und dem Fußkreisdurchmesser 15 (radial knapp innerhalb der Zahngründe 14). Der Platz reicht aus, um je Ritzel einen inneren Lochkreis 32 und einen äußeren Lochkreis 33 anzuordnen. Die größeren Ritzel können ohne Schwierigkeiten mittels Haltebolzen 30 verbunden werden. Beispielsweise ist der innere Lochkreis 32 des vierten Ritzels R4 über Stifte 30 mit dem Lochkreis des benachbarten kleineren Ritzels R3 verbunden und der äußere Lochkreis 33 des vierten Ritzels R4 ist über Stifte 30 mit dem inneren Lochkreis des benachbarten größeren Ritzels R5 verbunden (vgl. Figur 17).

Durch das Einpressen kommt es zu einem Reib- und Formschluss zwischen dem Haltebolzen 30 und den benachbarten Ritzeln. Zusätzliche Abstandshalter oder dergleichen werden nicht benötigt. Um die Verbindung besonders stabil zu machen, können die Haltebolzen 30 zusätzlich an ihren Enden verformt, insbesondere vernietet werden. Gerade am kleinsten Ritzel ist dies vorteilhaft. In Figur 16 sind sowohl die vernieteten Haltebolzen 30 zwischen den beiden kleinsten Ritzeln R1, R2 sichtbar, als auch die nicht vernieteten Haltebolzen 30 zwischen Ritzel R3 und R4. Ebenfalls zu erkennen ist die Schweißnaht 20 zwischen dem Ritzel R3 und R2.

## Patentansprüche

1. Mehrfach-Ritzelanordnung (10) zur drehmomentübertragenden Montage auf einem Antreiber (50) mit einem Mitnahmeprofil (51) und zum Eingriff in eine Fahrradkette (70) aufweisend eine Mehrzahl von benachbarten Ritzeln (R) mit einer jeweils unterschiedlichen Anzahl von Zähnen (13), wobei zumindest
- ein erstes Ritzel (R3) der Mehrzahl von benachbarten Ritzeln (R) einen ersten Innendurchmesser (16) aufweist, der größer bemessen ist als ein Außendurchmesser eines Profilgrundes (53) des Mitnahmeprofils (51) des Antreibers (50), und
- ein zweites Ritzel (R2) der Mehrzahl von benachbarten Ritzeln (R) einen zweiten Innendurchmesser (17) aufweist, der kleiner bemessen ist als der Außendurchmesser des Profilgrundes (53) des Mitnahmeprofils (51) des Antreibers (50), und
- mindestens ein Ritzel (R) ein Innenprofil aufweist, das mit dem Mitnahmeprofil (51) des Antreibers (50) in Eingriff bringbar ist und der Drehmomentübertragung dient,
wobei das erste Ritzel (R3) und das zweite Ritzel (R2) direkt miteinander verschweißt sind, **dadurch gekennzeichnet, dass**
das erste Ritzel (R3) einen ersten Flanschabschnitt (21) aufweist, der an eine flache Rückseite (12) des zweiten Ritzels (R2) stößt,
wobei sich der erste Flanschabschnitt (21) parallel zur Hinterradachse (A) erstreckt und ein freies Ende aufweist, das in Richtung des zweiten Ritzels (R2) weist,
und das erste Ritzel (R3) entlang des freien Endes des ersten Flanschabschnitts (21) mit dem zweiten Ritzel (R2) verschweißt ist.

2. Mehrfach-Ritzelanordnung nach Anspruch 1
**dadurch gekennzeichnet, dass** das zweite Ritzel (R2) einen dritten Flanschabschnitt (23) aufweist, mit dem ein drittes Ritzel (R1) durch Schweißen verbunden ist.

3. Mehrfach-Ritzelanordnung nach Anspruch 2,
**dadurch gekennzeichnet, dass** das dritte Ritzel (R1) einen vierten Flanschabschnitt (24) aufweist, mit dem es mit dem dritten Flanschabschnitt (23) des zweiten Ritzels (R2) durch Schweißen verbunden ist.

4. Mehrfach-Ritzelanordnung nach Anspruch 2 oder 3,
**dadurch gekennzeichnet, dass** das erste Ritzel (R3) einen fünften Flanschabschnitt (25) aufweist, mit dem ein viertes Ritzel (R4) durch Schweißen verbunden ist.

5. Mehrfach-Ritzelanordnung nach Anspruch 1, **dadurch gekennzeichnet, dass** ein drittes Ritzel (R1) mit dem zweiten Ritzel (R2) und/oder ein viertes Ritzel (R4) mit dem ersten Ritzel (R3) mittels separater Verbindungsmittel verbunden ist.

6. Mehrfach-Ritzelanordnung nach Anspruch 5, **dadurch gekennzeichnet, dass** die separaten Verbindungsmittel als sich parallel zur Hinterradachse (A) erstreckende Haltebolzen (30) ausgebildet sind.

7. Mehrfach-Ritzelanordnung nach Anspruch 6. **dadurch gekennzeichnet, dass** die Haltebolzen (30) in Öffnungen (31) eines Lochkreises (32, 33) eingepresst sind.

8. Mehrfach-Ritzelanordnung nach Anspruch 7, **dadurch gekennzeichnet, dass** das vierte Ritzel (R4) einen inneren Lochkreis (32) mit Öffnungen (31) und einen äußeren Lochkreis (33) mit Öffnungen (31) aufweist.

9. Fahrradantrieb aufweisend:
- eine Mehrfach-Ritzelanordnung (10) nach einem der Ansprüche 1 - 8,
- eine Fahrradkette (70) und
- eine Kettenringanordnung (80) mit mindestens einem Kettenring (81).

## Claims

1. Multiple pinion arrangement (10) for mounting, in a torque-transmitting manner, on a driver (50) with a driving profile (51) and for engagement in a bicycle chain (70), having a plurality of adjacent pinions (R) each with a different number of teeth (13), wherein at least
- a first pinion (R3) of the plurality of adjacent pinions (R) has a first internal diameter (16), which is larger than an external diameter of a profile base (53) of the driving profile (51) of the driver (50), and
- a second pinion (R2) of the plurality of adjacent pinions (R) has a second internal diameter (17), which is smaller than the external diameter of the profile base (53) of the driving profile (51) of the driver (50), and
- at least one pinion (R) has an internal profile which can be brought into engagement with the driving profile (51) of the driver (50) and serves for the transmission of torque,
wherein the first pinion (R3) and the second pinion (R2) are welded to one another directly,
**characterized in that**
the first pinion (R3) has a first flange portion (21) which butts against a flat back side (12) of the second pinion (R2),
wherein the first flange portion (21) extends parallel to the rear-wheel axis (A) and has a free end, which points in the direction of the second pinion (R2),
and the first pinion (R3) is welded to the second pinion (R2) along the free end of the first flange portion (21).

2. Multiple pinion arrangement according to Claim 1, **characterized in that** the second pinion (R2) has a third flange portion (23), to which a third pinion (R1) is connected by welding.

3. Multiple pinion arrangement according to Claim 2, **characterized in that** the third pinion (R1) has a fourth flange portion (24), by means of which it is connected to the third flange portion (23) of the second pinion (R2) by welding.

4. Multiple pinion arrangement according to Claim 2 or 3, **characterized in that** the first pinion (R3) has a fifth flange portion (25), to which a fourth pinion (R4) is connected by welding.

5. Multiple pinion arrangement according to Claim 1, **characterized in that** a third pinion (R1) is connected to the second pinion (R2) and/or a fourth pinion (R4) is connected to the first pinion (R3) by separate connecting means.

6. Multiple pinion arrangement according to Claim 5, **characterized in that** the separate connecting means are in the form of retaining bolts (30) extending parallel to the rear-wheel axis (A).

7. Multiple pinion arrangement according to Claim 6, **characterized in that** the retaining bolts (30) are pressed in openings (31) of a ring of holes (32, 33).

8. Multiple pinion arrangement according to Claim 7, **characterized in that** the fourth pinion (R4) has an inner ring of holes (32) with openings (31) and an outer ring of holes (33) with openings (31).

9. Bicycle drive comprising:
- a multiple pinion arrangement (10) according to one of Claims 1-8,
- a bicycle chain (70) and
- a chain ring arrangement (80) with at least one chain ring (81).

## Revendications

1. Agencement de pignons multiples (10) destiné à être monté, de manière à transmettre un couple, sur un élément d'entraînement (50) doté d'un profil d'entraînement (51) et à venir en prise dans une chaîne de vélo (70), comprenant une pluralité de pignons adjacents (R) présentant un nombre respectivement différent de dents (13), dans lequel au moins
- un premier pignon (R3) de la pluralité de pignons adjacents (R) présente un premier diamètre intérieur (16) qui est dimensionné de manière à être supérieur à un diamètre extérieur d'une base (53) du profil d'entraînement (51) de l'élément d'entraînement (50), et
- un deuxième pignon (R2) de la pluralité de pignons adjacents (R) présente un deuxième diamètre intérieur (17) qui est dimensionné de manière à être inférieur au diamètre extérieur de la base (53) du profil d'entraînement (51) de l'élément d'entraînement (50), et
- au moins un pignon (R) comprend un profil intérieur qui peut être amené en prise avec le profil d'entraînement (51) de l'élément d'entraînement (50) et sert à la transmission de couple,
dans lequel le premier pignon (R3) et le deuxième pignon (R2) sont soudés directement l'un sur l'autre, **caractérisé en ce que**
le premier pignon (R3) comprend une première partie de flasque (21) qui bute contre un côté arrière plat (12) du deuxième pignon (R2),
la première partie de flasque (21) s'étendant parallèlement à l'axe de roue arrière (A) et comprenant une extrémité libre qui est orientée en direction du deuxième pignon (R2),
et le premier pignon (R3) est soudé sur le deuxième pignon (R2) le long de l'extrémité libre de la première partie de flasque (21).

2. Agencement de pignons multiples selon la revendication 1,
**caractérisé en ce que** le deuxième pignon (R2) comprend une troisième partie de flasque (23) à laquelle un troisième pignon (R1) est relié par soudage.

3. Agencement de pignons multiples selon la revendication 2,
**caractérisé en ce que** le troisième pignon (R1) comprend une quatrième partie de flasque (24) par laquelle il est relié par soudage à la troisième partie de flasque (23) du deuxième pignon (R2).

4. Agencement de pignons multiples selon la revendication 2 ou 3,
**caractérisé en ce que** le premier pignon (R3) comprend une cinquième partie de flasque (25) à laquelle un quatrième pignon (R4) est relié par soudage.

5. Agencement de pignons multiples selon la revendication 1,
**caractérisé en ce qu'**un troisième pignon (R1) est relié au deuxième pignon (R2) et/ou un quatrième pignon (R4) est relié au premier pignon (R3) par le biais de moyens de liaison séparés.

6. Agencement de pignons multiples selon la revendication 5,
**caractérisé en ce que** les moyens de liaison séparés sont réalisés sous forme de boulons de retenue (30) s'étendant parallèlement à l'axe de roue arrière (A).

7. Agencement de pignons multiples selon la revendication 6,
**caractérisé en ce que** les boulons de retenue (30) sont pressés dans des ouvertures (31) d'un cercle de trous (32, 33).

8. Agencement de pignons multiples selon la revendication 7,
**caractérisé en ce que** le quatrième pignon (R4) comprend un cercle de trous intérieur (32) doté d'ouvertures (31) et un cercle de trous extérieur (33) doté d'ouvertures (31) .

9. Entraînement de vélo, comprenant :
- un agencement de pignons multiples (10) selon l'une des revendications 1 à 8,
- une chaîne de vélo (70) et
- un agencement de plateaux de chaîne (80) doté d'au moins un plateau de chaîne (81).
